(19) Europäisches Patentamt
European Patent Office
Office européen des brevets

(11) EP 0 480 281 B1

(12) EUROPÄISCHE PATENTSCHRIFT

(45) Veröffentlichungstag und Bekanntmachung des Hinweises auf die Patenterteilung:
**28.08.1996 Patentblatt 1996/35**

(51) Int Cl.[6]: **C09B 53/00**, B41M 5/38

(21) Anmeldenummer: **91116656.9**

(22) Anmeldetag: **30.09.1991**

# (54) Indophenolfarbstoffe und ein Verfahren zu ihrer thermischen Übertragung

Indophenoldyes and a procedure for their thermal transfer

Colerants du type indophenol et un procédé pour leurs transfert thermique

(84) Benannte Vertragsstaaten:
**CH DE FR GB IT LI**

(30) Priorität: **08.10.1990 DE 4031804**

(43) Veröffentlichungstag der Anmeldung:
**15.04.1992 Patentblatt 1992/16**

(73) Patentinhaber: **BASF Aktiengesellschaft
67063 Ludwigshafen (DE)**

(72) Erfinder:
- **Bach, Volker, Dr.
W-6730 Neustadt (DE)**
- **Etzbach, Karl-Heinz, Dr.
W-6710 Frankenthal (DE)**
- **Sens, Ruediger, Dr.
W-6800 Mannheim 1 (DE)**

(56) Entgegenhaltungen:
**EP-A- 0 307 713**

- **PATENT ABSTRACTS OF JAPAN vol. 11, no. 125 (M-582)(2572) 18. April 1987 & JP-A- 61 268 493 ( DAINIPPON PRINTING CO LTD ) 27. November 1986**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue Indophenolfarbstoffe der Formel I

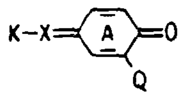 (I),

in der

X Stickstoff,

Q einen fünfgliedrigen aromatischen heterocyclischen Rest, der sich von einem Heterocyclus ableitet, ausgewählt aus der Gruppe, bestehend aus Pyrazol, Imidazol, Oxazol, Isoxazol, Thiazol, Isothiazol, Indazol, Benzimidazol, Benzoxazol, Benzisoxazol, Benzthiazol und Benzisothiazol, und

K einen Rest der Formel

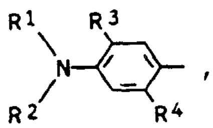 ,
(IIa)

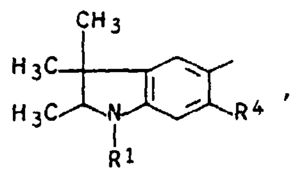 ,
(IIb)

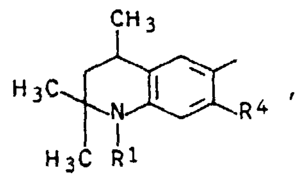 ,
(IIc)

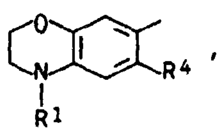 ,
(IId)

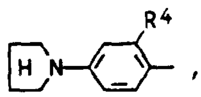 ,
(IIe)

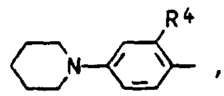 ,
(IIf)

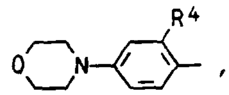 ,
(IIg)

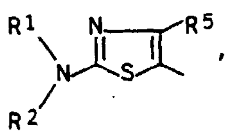 ,
(IIh)

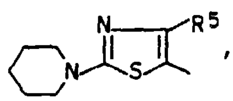 ,
(IIi)

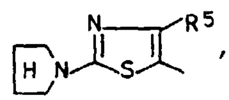 ,
(IIj)

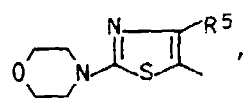 ,
(IIk)

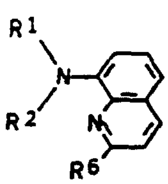
(IIl)

oder

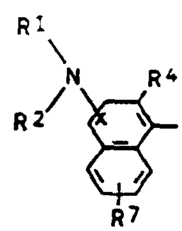
(IIm)

bedeuten, worin

$R^1$ und $R^2$ gleich oder verschieden sind und unabhängig voneinander jeweils für Wasserstoff, $C_1$-$C_8$-Alkyl, das gegebenenfalls substituiert ist und durch ein oder zwei Sauerstoffatome in Etherfunktion unterbrochen sein kann oder $C_5$-$C_7$-Cycloalkyl,

$R^3$ für Wasserstoff, Methyl, Ethyl, Methoxy oder Ethoxy,

$R^4$ für Wasserstoff, Methyl, Methoxy, $C_1$-$C_4$-Alkylsulfonylamino, $C_1$-$C_4$-Mono- oder -Dialkylaminosulfonylamino oder den Rest -$NHCOR^8$ oder -$NHCO_2R^8$ stehen, worin $R^8$ jeweils die Bedeutung von Phenyl, Benzyl, Tolyl oder $C_1$-$C_8$-Alkyl, das gegebenenfalls durch ein oder zwei Sauerstoffatome in Etherfunktion unterbrochen ist, besitzt,

$R^5$ für Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl, Hydroxy oder $C_1$-$C_8$-Monoalkylamino,

$R^6$ für Wasserstoff oder Methyl und

$R^7$ für Wasserstoff, Methyl, Methoxy oder Acetylamino stehen und

der Ring A durch einen gegebenenfalls substituierten Benzoring anelliert sein kann, sowie ein Verfahren zu ihrer thermischen Übertragung.

Aus der JP-A-268 493/1986 sind Indophenol- und Indonaphtholfarbstoffe bekannt, die bei thermischen Übertragungsprozessen zur Anwendung kommen sollen.

Aufgabe der vorliegenden Erfindung war es, neue Indophenolfarbstoffe bereitzustellen, die über vorteilhafte anwendungstechnische Eigenschaften verfügen.

Demgemäß wurden die eingangs näher bezeichneten Indophenolfarbstoffe der Formel I gefunden.

Alle in der obengenannten Formel I auftretenden Alkylgruppen können sowohl geradkettig als auch verzweigt sein.

Wenn in der obengenannten Formel I substituierte Alkylgruppen auftreten, so können als Substituenten z. B. Cyano, $C_1$-$C_6$-Alkanoyloxy, $C_1$-$C_4$-Alkoxycarbonyl oder $C_1$-$C_4$-Alkoxycarbonyloxy, wobei im letzten Fall die Alkoxygruppe durch Phenyl oder $C_1$-$C_4$-Alkoxy substituiert sein kann, in Betracht kommen.

Wenn der Ring A in Formel I durch einen substituierten Benzoring anelliert ist, so können als Substituenten z.B. Methyl, Chlor, Methylsulfonylamino oder Acetylamino in Betracht kommen. Der Benzoring ist daher in der Regel ein- oder zweifach substituiert.

Geeignete Reste $R^1$, $R^2$ und $R^5$ sind z. B. Methyl, Ethyl, Propyl, Isopropyl, Butyl, Isobutyl, sec-Butyl, Pentyl, Isopentyl, Neopentyl, tert-Pentyl, Hexyl, 2-Methylpentyl, Heptyl, Octyl oder 2-Ethylhexyl.

Reste $R^1$ und $R^2$ sind weiterhin z.B. 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Propoxycarbonyloxyethyl, 2- oder 3-Propoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl, 2- oder 3-(2-Ethoxyethoxycarbonyloxy)propyl, Cyclopentyl, Cyclohexyl oder Cycloheptyl.

Reste $R^1$ und $R^2$ sind weiterhin z.B. 2-Methoxyethyl, 2- oder 3-Methoxypropyl, 2-Ethoxyethyl, 2- oder 3-Ethoxypropyl, 2-Propoxyethyl, 2- oder 3-Propoxypropyl, 2-Butoxyethyl, 2- oder 3-Butoxypropyl, 3,6-Dioxaheptyl oder 3,6-Dioxaoctyl.

Geeignete Reste $R^4$ sind z. B. Methyl-, Ethyl-, Propyl- oder Butylsulfonylamino, Mono-oder Dimethyl-, -ethyl-, -propyl- oder -butylaminosulfonylamino.

Reste $R^5$ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl oder 2,4-Dimethoxyphenyl.

Die Reste Q leiten sich von einem fünfgliedrigen aromatischen heterocyclischen Rest ab, der ausgewählt ist aus der Gruppe, bestehend aus Pyrazol, Imidazol, Oxazol, Isoxazol, Thiazol, Isothiazol, Indazol, Benzimidazol, Benzoxazol, Benzisoxazol, Benzthiazol und Benzisothiazol.

Hervorzuheben sind dabei Heterocyclen aus der Imidazol-, Pyrazol-, Thiazol-, Isothiazol- oder Benzimidazolreihe.

Von besonderer Bedeutung sind dabei Indophenolfarbstoffe der Formel I, in der Q für einen Rest der Formel

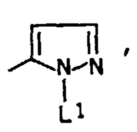 ,
(IIIa)

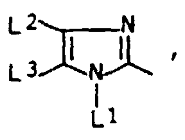 ,
(IIIb)

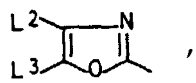 ,
(IIIc)

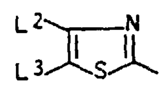
(IIId)

oder

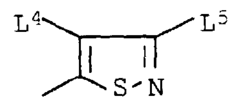

(IIIe)

steht,
worin

$L^1$ Wasserstoff, $C_1$-$C_8$-Alkyl, Benzyl, Cyclohexyl, Phenyl oder Tolyl,

$L^2$ Wasserstoff, Chlor, $C_1$-$C_8$-Alkyl, das gegebenenfalls durch ein Sauerstoffatom in Etherfunktion unterbrochen ist, Phenyl, $C_1$-$C_8$-Alkoxy, Cyano oder $C_1$-$C_8$-Alkoxycarbonyl, wobei die Alkylgruppe durch ein oder zwei Sauerstoffatome in Etherfunktion unterbrochen sein kann,

$L^3$ Wasserstoff, $C_1$-$C_8$-Alkyl, Phenyl, Cyano, Nitro oder $C_1$-$C_8$-Alkoxycarbonyl, wobei die Alkylgruppe durch ein oder zwei Sauerstoffatome in Etherfunktion unterbrochen sein kann, oder $L^2$ und $L^3$ zusammen einen anellierten Benzoring,

$L^4$ Wasserstoff, Chlor, Cyano, Nitro oder $C_1$-$C_8$-Alkoxycarbonyl, wobei die Alkylgruppe durch ein oder zwei Sauerstoffatome in Etherfunktion unterbrochen sein kann, und

$L^5$ Chlor, $C_1$-$C_8$-Alkyl, das gegebenenfalls durch ein Sauerstoffatom in Etherfunktion unterbrochen ist, $C_1$-$C_8$-Alkoxy oder $C_1$-$C_8$-Alkylthio bedeuten.

Reste $L^1$, $L^2$, $L^3$ und $L^5$ sind z.B. Methyl, Ethyl, Propyl, Isopropyl, Butyl, Isobutyl, sec-Butyl, Pentyl, Isopentyl, Neopentyl, tert-Pentyl, Hexyl, 2-Methylpenyl, Heptyl, Octyl oder 2-Ethylhexyl.

Reste $L^2$ und $L^5$ sind weiterhin z.B. 2-Methoxyethyl, 2- oder 3-Methoxypropyl, 2-Ethoxyethyl, 2- oder 3-Ethoxypropyl, Methoxy, Ethoxy, Propoxy, Isopropoxy, Butoxy, Isobutoxy, sec-Butoxy, Pentyloxy, Isopentyloxy, Neopentyloxy, Hexyloxy, Heptyloxy, Octyloxy oder 2-Ethylhexyloxy.

Reste $L^5$ sind weiterhin z.B. Methylthio, Ethylthio, Propylthio, Isopropylthio, Butylthio, Isobutylthio, Pentylthio, Hexylthio, Heptylthio oder Octylthio.

Reste $L^2$, $L^3$ und $L^4$ sind weiterhin z.B. Methoxycarbonyl, Ethoxycarbonyl, Propoxycarbonyl, Isopropoxycarbonyl, Butoxycarbonyl, 2-Methoxyethoxycarbonyl, 2-Ethoxyethoxycarbonyl, 3,6-Dioxaheptyloxycarbonyl oder 3,6-Dioxaoctyloxycarbonyl.

Besonders bevorzugt sind weiterhin Indonaphtholfarbstoffe der Formel I, in der K der Formel IIa oder IIc entspricht.

Besonders bevorzugt sind weiterhin Indonaphtholfarbstoffe der Formel I, in der Q der Formel IIIa, IIIb, IIIc oder IIId entspricht.

Die erfindungsgemäßen Indophenolfarbstoffe der Formel I können nach an sich bekannten Methoden hergestellt werden.

Beispielsweise kann man eine Nitrosoverbindung der Formel IV

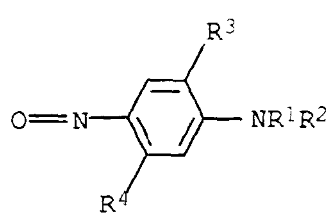

(IV),

worin $R^1$, $R^2$, $R^3$ und $R^4$ jeweils die obengenannte Bedeutung besitzen, mit einer Phenolverbindung der Formel V

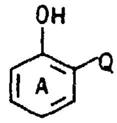

(V)

worin Q und der Ring A jeweils die obengenannte Bedeutung besitzen, kondensieren (siehe z.B. DE-A-3 716 656).

Es ist auch möglich, p-Phenylendiamine der Formel VI

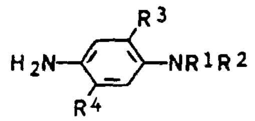 (VI),

worin $R^1$, $R^2$, $R^3$ und $R^4$ jeweils die obengenannte Bedeutung besitzen, mit den Phenolverbindungen der Formel V oder deren 4-Chlorderivaten oxidativ zu kuppeln (siehe z.B. US-A-4 695 287).

Eine weitere Aufgabe der vorliegenden Erfindung war es, ein neues Verfahren für den thermischen Transfer von Farbstoffen bereitzustellen.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. einem Heizkopf oder einem Laser, durch kurze Heizimpulse (Dauer: Bruchteile einer Sekunde) von der Rückseite her erhitzt, wodurch der Farbstoff auf dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei substraktiven Grundfarben Gelb, Magenta, Cyan (und gegebenenfalls Schwarz) durchgeführt.

Um eine optimale Farbaufzeichnung zu ermöglichen, müssen die Farbstoffe folgende Eigenschaften besitzen:

- leichte thermische Transferierbarkeit,
- geringe Migration innerhalb oder aus der Oberflächenbeschichtung des Aufnahmemediums bei Raumtemperatur,
- hohe thermische und photochemische Stabilität sowie Resistenz gegen Feuchtigkeit und chemische Stoffe,
- für substraktive Farbmischung die geeigneten Farbtöne aufweisen,
- einen hohen molaren Absorptionskoeffizienten aufweisen,
- bei Lagerung des Transferblattes nicht auskristallisieren,
- technisch leicht zugänglich sein.

Diese Forderungen sind erfahrungsgemäß gleichzeitig sehr schwierig zu erfüllen.

Daher entsprechen die meisten der bekannten, für den thermischen Transferdruck verwendeten Farbstoffe nicht dem geforderten Anforderungsprofil.

Es wurde nun gefunden, daß die übertragung von Indophenolfarbstoffen von einem Träger auf ein mit Kunststoff beschichtetes Papier durch Diffusion oder Sublimation mit Hilfe einer Energiequelle vorteilhaft gelingt, wenn man einen Träger verwendet, auf dem sich ein oder mehrere Indophenolfarbstoffe der obengenannten Formel I befinden.

Im Vergleich zu den bei den bekannten Verfahren verwendeten Farbstoffen zeichnen sich die beim erfindungsgemäßen Verfahren übertragenen Farbstoffe im allgemeinen durch verbesserte Migrationseigenschaften im Aufnahmemedium bei Raumtemperatur, leichtere thermische Transferierbarkeit, höhere thermische und photochemische Stabilität, leichtere technische Zugänglichkeit, bessere Resistenz gegen Feuchtigkeit und chemische Stoffe, höhere Farbstärke, bessere Löslichkeit oder höhere Farbtonreinheit aus.

Aufgrund ihrer hohen molaren Extinktionskoeffizienten und ihrer hohen Brillanz sind die im neuen Verfahren angewandten Farbstoffe der Formel I für die Herstellung eines, für die subtraktive Farbmischung erforderlichen, Trichromiesystems vorteilhaft geeignet.

Bei Abmischung mit Triazolopyridinfarbstoffen, wie sie in der älteren Patentanmeldung EP-A-416 434 beschrieben sind, wird eine hohe Farbtonreinheit und in entsprechenden Trichromiesystemen eine Verbesserung der Schwarz-Drucke erzielt.

Zur Herstellung der für das erfindungsgemäße Verfahren benötigten Farbstoffträger werden die Farbstoffe in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält den Farbstoff vorzugsweise in molekulardispers gelöster Form. Die Druckfarbe kann mittels einer Rakel auf den inerten Träger aufgetragen und die Färbung an der Luft getrocknet werden.

Geeignete organische Lösungsmittel für die Farbstoffe I sind z.B. solche, in denen die Löslichkeit der Farbstoffe I bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, welche in organischen Lösungsmitteln löslich sind und den Farbstoffe an den inerten Träger abriebfest zu binden vermögen. Dabei werden solche Bindemittel bevorzugt, welche den Farbstoff nach Trocknung der Druckfarbe an der Luft in Form eines klaren, transparenten Films aufnehmen, ohne daß dabei eine sichtbare Auskristallisation des Farbstoffs auftritt.

Beispiele für solche Bindemittel sind Cellulosederivate, z.B. Methylcellulose, Ethylcellulose, Ethylhydroxyethylcellulose, Hydroxypropylcellulose, Celluloseacetat oder Celluloseacetobutyrat, Stärke Alginate, Alkydresins, Vinylresins, Polyvinylalkhol, Polvinylacetat, Polyvinylbutyrat oder Polyvinylpyrrolidon. Weiterhin kommen Polymere und Copolymere von Acrylaten oder deren Derivate, wie Polyacrylsäure, Polymethylmethacrylat oder Styrolacrylatcopolymere, Polyesterresins, Polyamidresins, Polyurethanresins oder natürliche CH-Resins, wie Gummi Arabicum, als Bindemittel in Betracht. Weitere geeignete Bindemittel sind z.B. in der DE-A-3 524 519 beschrieben.

Bevorzugte Bindemittel sind Ethylcellulose, Ethylhydroxyethylcellulose, Polyvinylbutyrat oder Polyvinylacetat.

Das Gewichtsverhältnis Bindemittel:Farbstoff beträgt im allgemeinen 1:1 bis 10:1.

Als Hilfsmittel kommen z.B. Trennmittel in Betracht, wie sie in der EP-A-227 092, EP-A-192 435 oder den dort zitierten Patentanmeldungen spezifiziert sind. Darüber hinaus sind besonders organische Additive zu nennen, welche das Auskristallisieren der Transferfarbstoffe bei Lagerung oder beim Erhitzen des Farbbandes verhindern, z. B. Cholesterin oder Vanillin.

Inerte Träger sind z. B. Seiden-, Lösch- oder Pergaminpapier oder Kunststoffolien mit guter Wärmebeständigkeit, z. B. gegebenenfalls metallbeschichteter Polyester, Polyamid oder Polyimid. Der inerte Träger wird auf der dem Thermokopf zugewandten Seite gegebenenfalls zusätzlich mit einer Gleitmittelschicht (Slipping layer) beschichtet, um ein Verkleben der Energiequelle, insbesondere des Thermokopfes, mit dem Trägermaterial zu verhindern. Geeignete Gleitmittel werden z.B. in der EP-A-216 483 oder EP-A-227 095 beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z. B. modifizierte Polycarbonate oder Polyester. Geeignete Rezepturen für die Nehmerschichtzusammensetzung werden z.B. in der EP-A-227 094, EP-A-133 012, EP-A-133 011, EP-A-111 004, JP-A-199 997/1986, JP-A-283 595/1986, JP-A-237 694/1986 oder JP-A-127 392/1986 ausführlich beschrieben.

Die Übertragung erfolgt mittels einer Energiequelle, z.B. mittels eines Lasers oder vorzugsweise mittels eines Thermokopfes, wobei letzterer auf eine Temperatur von ≥ 300°C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffe eignen sich weiterhin vorteilhaft zum Färben von synthetischen Materialien, z.B. von Polyestern, Polyamiden oder Polycarbonaten. Insbesondere zu nennen sind textile Gewebe aus Polyester oder Polyamid oder Polyester-Baumwolle-Mischgewebe. Die neuen Farbstoffe eignen sich weiterhin vorteilhaft für die Herstellung von Farbfiltern, wie sie z.B. in der EP-A-399 473 beschrieben sind.

Schließlich können sie auch vorteilhaft für die Herstellung von Tonern für die Elektrophotographie verwendet werden.

Die folgenden Beispiele sollen die Erfindung näher erläutern. Angaben über Prozente beziehen sich, sofern nicht anders vermerkt, auf das Gewicht.

Herstellung der Farbstoffe

Beispiel 1

a)

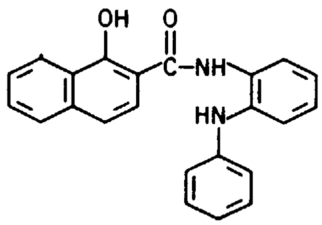

37,6 g 1-Hydroxynaphthalin-2-carbonsäure und 36,8 g 2-Aminodiphenylamin wurden in 250 ml Dioxan gelöst und auf eine Temperatur von 50°C gebracht. Unter starkem Rühren wurde eine Lösung von 49,6 g Dicyclohexylcarbodiimid in

150 ml Dioxan zugetropft und bis zur vollständigen Umsetzung (DC-Kontrolle) weiter gerührt. Nach Abkühlen auf Raumtemperatur wurde der sich abscheidende Harnstoff abgesaugt, das Filtrat in 4 l Eiswaser eingerührt, der sich dann bildende Niederschlag abgesaugt, getrocknet und aus n-Propanol umkristallisiert [Fp.: 128-129°C, $R_f$-Wert ($SiO_2$, Toluol/Essigester-3:2 v/v):0,87].

b)

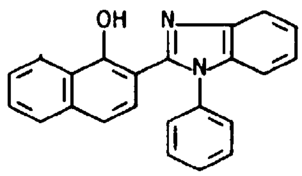

27 g der unter la erhaltenenen Verbindung wurden in 270 ml Essigsäure bei Siedetemperatur bis zur vollständigen Umsetzung (DC-Kontrolle) erhitzt, in 2,7 l Eiswasser eingerührt, mit Essigsäureethylester ausgeschüttelt, getrocknet und das Lösungsmittel unter vermindertem Druck entfernt. Ausbeute: 22,5 g [Fp.: 168-169°C, $R_f$-Wert ($SiO_2$, Toluol/Essigester - 5:1 v/v): 0,92].

c)

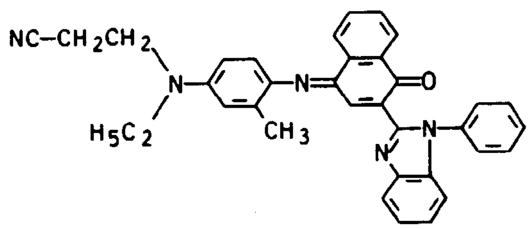

3,8 g N-(2-Cyanoethyl)-N-ethyl-m-toluidin wurden auf übliche Weise mit Natriumnitrit in salzsaurer Lösung nitrosiert. Die entstehende Nitrosoverbindung wurde in Methylenchlorid aufgenommen, zu einer Lösung von 6,8 g des Naphthols (1b) in 50 ml Methylenchlorid und 50 ml Acetanhydrid gegeben und bei Raumtemperatur bis zur vollständigen Umsetzung weitergerührt (DC-Kontrolle). Anschließend wurden 100 ml Wasser zugesetzt, 1 Stunde auf 40°C erwärmt und anschließend das Methylenchlorid weitgehend abdestilliert. Nach Abkühlen auf Raumtemperatur wurde die Farbstoffpaste abgetrennt, mit Wasser gewaschen, in N,N-Dimethylformamid gelöst, durch Zugabe von Wasser gefällt, abgesaugt, unter vermindertem Druck bei 50°C getrocknet und an Kieselgel (mit Toluol/Essigester = 3:2 v/v) chromatographiert ($R_f$-Wert (Toluol/Essigester = 3:2 v/v):0,54). $\lambda_{max}$ (gemessen in Methylenchlorid): 620 nm. Ausbeute: 5,5 g.

In analoger Weise wurden die in der folgenden Tabelle 1 aufgeführten Farbstoffe der Formel

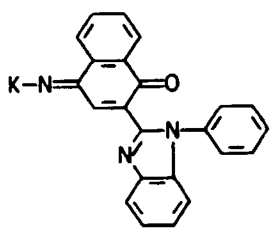

erhalten.

Tabelle 1

| Bsp. Nr. | K | $R_f$-Wert | λmax. [nm] |
|---|---|---|---|
| 2 | 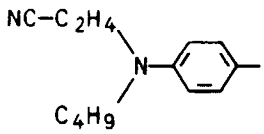 | 0,63 b) | 600 c) |
| 3 | 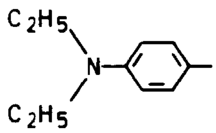 | 0,35 a) | 638 c) |
| 4 | 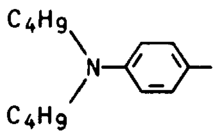 | 0,55 a) | 644 c) |
| 5 | 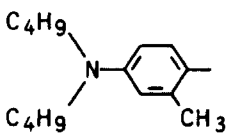 | 0,57 a) | 662 c) |
| 6 | 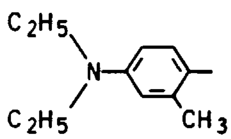 | 0,67 b) | 655 c) |
| 7 | 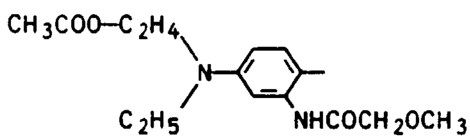 | 0,30 b) | 639 d) |
| 8 | 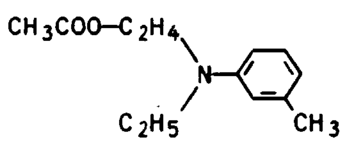 | 0,22 a) | 639 c) |
| 9 | 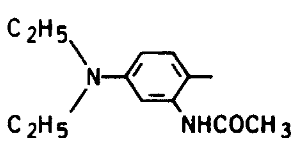 | 0,19 b) | 672 c) |

Tabelle 1 (Fortsetzung)

| Bsp. Nr. | K | $R_f$-Wert | λmax. [nm] |
|---|---|---|---|
| 10 | 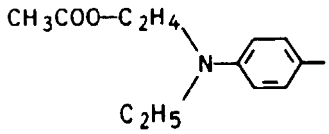 | 0,21[a] | 625[c] |
| 11 | 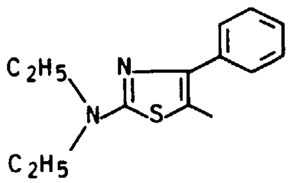 | 0,63[a] | 648[c] |
| 12 | 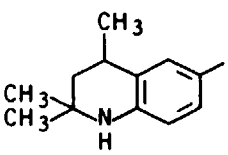 | 0,20[a] | 627[c] |
| 13 | 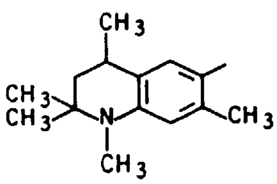 | 0,64[a] | 665[d] |
| 14 | 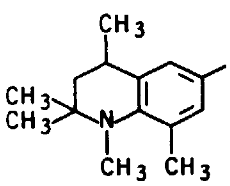 | 0,71[b] | 637[c] |

a) Laufmittel: Toluol/Essigsäureethylester 5:1 v/v

b) Laufmittel: Toluol/Essigsäureethylester 3:2 v/v

c) gemessen in Methylenchlorid

d) gemessen in Aceton

Beispiel 15

a)

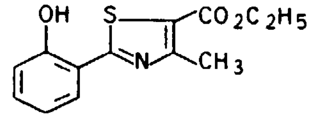

3,6 g 2-Hydroxythiobenzamid und 3,3 g 2-Chloracetessigsäureethylester wurden in 80 ml Isopropanol bis zur vollständigen Umsetzung (DC-Kontrolle) bei Rückflußtemperatur gerührt. Nach Abkühlen auf Raumtemperatur wurde der Niederschlag abgesaugt, mit Isopropanol gewaschen und getrocknet (Fp.: 88-90°C).

b)

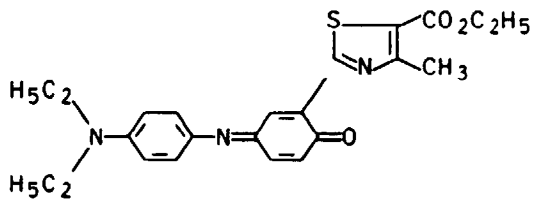

2,1 g N,N-Diethylanilin wurden auf übliche Weise mit Natriumnitrit in salzsaurer Lösung nitrosiert. Die entstehende Nitrosoverbindung wurde in Methylenchlorid aufgenommen, zu einer Lösung von 3,7 g des Phenols (a) in 35 ml Methylenchlorid und 37 ml Acetanhydrid gegeben und bei Raumtemperatur bis zur vollständigen Umsetzung weitergerührt (DC-Kontrolle). Anschließend wurden 100 ml Wasser zugesetzt, 1 Stunde auf 40°C erwärmt und anschließend das Methylenchlorid weitgehend abdestilliert. Nach Abkühlen auf Raumtemperatur wurde die Farbstoffpaste abgetrennt, mit Wasser gewaschen, in N,N-Dimethylformamid gelöst, durch Zugabe von Wasser gefällt, abgesaugt, unter vermindertem Druck getrocknet und an Kieselgel (mit Toluol/Essigester = 5:1 v/v) chromatographiert ($R_f$-Wert (Toluol/Essigester = 5:1 v/v):0,52). $\lambda_{max}$ (gemessen in Aceton): 669 nm.

Transfer der Farbstoffe

Um das Transferverhalten der Farbstoffe quantitativ und in einfacher Weise prüfen zu können, wurde der Thermotransfer mit großflächigen Heizbacken statt eines Thermokopfes durchgeführt, wobei die Transfertemperatur im Bereich 70 °C < T < 120 °C variierte und die Transferzeit auf 2 Minuten festgelegt wurde.

α) Allgemeines Rezept für die Beschichtung der Träger mit Farbstoff:

1 g Bindemittel wurde in 8 ml Toluol/Ethanol (8:2 v/v) bei 40 bis 50 °C gelöst. Dazu wurde eine Lösung aus 0,25 g Farbstoff in 15 ml Tetrahydrofuran eingerührt und gegebenenfalls von unlöslichem Rückstand abfiltriert. Die so erhaltene Druckpaste wurde mit einer 80 µm Rakel auf eine Polyesterfolie (Dicke: 6 bis 10 µm) abgezogen und mit einem Fön getrocknet.

β) Prüfung auf thermische Transferierbarkeit

Die verwendeten Farbstoffe wurden in der folgenden Weise geprüft: Die den zu prüfenden Farbstoff in der Beschichtungsmasse (Vorderseite) enthaltende Polyesterfolie (Geber) wurde mit der Vorderseite auf kommerziell erhältliches (unten näher bezeichnetetes) Papier (Nehmer) gelegt und aufgedrückt. Geber/Nehmer wurden dann mit Aluminiumfolie umwickelt und zwischen zwei beheizten Platten bei verschiedener Temperatur T (im Temperaturintervall 70 °C < T < 120 °C) erhitzt. Die in die glänzende Kunststoffschicht des Nehmers diffundierte Farbstoffmenge ist proportional der optischen Dichte (= Extinktion A). Letztere wurde photometrisch bestimmt. Trägt man den Logarithmus der im Temperaturintervall zwischen 80 und 110 °C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2{,}3 \cdot R \cdot \frac{\Delta \log A}{\Delta \frac{1}{T}}$$

Zur vollständigen Charakterisierung wurde aus den Auftragungen zusätzlich die Temperatur T*[°C] entnommen, bei der die Extinktion A der angefärbten Nehmerpapiere den Wert 1 erreicht.

Die in der folgenden Tabelle 2 aufgeführten Farbstoffe wurden nach α) verarbeitet und die erhaltenen, mit Farbstoff beschichteten Träger nach β) auf das Transferverhalten geprüft. In der Tabelle sind jeweils die Thermotransferparameter T* und $\Delta E_T$ sowie das Gewichtsverhältnis Farbstoff:Bindemittel aufgeführt.

Dabei gelten folgende Abkürzungen:

F = Farbstoff
VY-SX = Hitachi VY-SX Paper (Nehmer)
VY-C = Hitachi VY-C Paper (Nehmer)
VY-T = Hitachi VY-T Paper (Nehmer)
HCVPP = Hitachi Color Video Print Paper (Nehmer)
B = Bindemittel (EHEC = Ethylhydroxyethylcellulose

V = Vylon®290 (Fa. Toyobo)
PVB = Polyvinylbutyrat
EC = Ethylcellulose)

| Bsp. Nr. | Farbstoff Nr. | ΔET [KJ/mol] | T [°C] | B | F:B | Nehmer |
|---|---|---|---|---|---|---|
| 16 | 2 | 82 | 104 | EHEC | 1:1 | HCVPP |
| 17 | 2 | 93 | 112 | EHEC | 1:1 | VY-C |
| 18 | 2 | 71 | 86 | V | 1:2 | HCVPP |
| 19 | 2 | 56 | 93 | V | 1:2 | VY-C |
| 20 | 2 | 84 | 99 | PVB | 1:1 | HCVPP |
| 21 | 2 | 77 | 106 | PVB | 1:1 | VY-C |
| 22 | 3 | 92 | 97 | EHEC | 1:1 | HCVPP |
| 23 | 3 | 105 | 104 | EHEC | 1:1 | VY-C |
| 24 | 3 | 12 | 79 | V | 1:2 | HCVPP |
| 25 | 3 | 49 | 92 | V | 1:2 | VY-C |
| 26 | 3 | 106 | 100 | PVB | 1:1 | HCVPP |
| 27 | 3 | 122 | 105 | PVB | 1:1 | VY-C |
| 28 | 1 | 83 | 109 | EHEC | 1:1 | HCVPP |
| 29 | 1 | 96 | 114 | EHEC | 1:1 | VY-C |
| 30 | 1 | 50 | 105 | V | 1:2 | VY-C |
| 31 | 1 | 70 | 97 | PVB | 1:1 | HCVPP |
| 32 | 1 | 76 | 101 | PVB | 1:1 | VY-C |
| 33 | 4 | 123 | 87 | EHEC | 1:1 | HCVPP |
| 34 | 4 | 94 | 96 | EHEC | 1:1 | VY-C |
| 35 | 4 | 54 | 70 | V | 1:2 | HCVPP |
| 36 | 4 | 43 | 78 | V | 1:2 | VY-C |
| 37 | 4 | 34 | 83 | V | 1:2 | VY-T |
| 38 | 4 | 110 | 93 | PVB | 1:1 | HCVPP |
| 39 | 4 | 114 | 101 | PVB | 1:1 | VY-C |
| 40 | 4 | 114 | 89 | PVB | 1:1 | VY-T |

| Bsp. Nr. | Farbstoff Nr. | ΔET [KJ/mol] | T [°C] | B | F:B | Nehmer |
|---|---|---|---|---|---|---|
| 41 | 5 | 100 | 92 | EHEC | 1:1 | HCVPP |
| 42 | 5 | 114 | 101 | EHEC | 1:1 | VY-C |
| 43 | 5 | 43 | 79 | V | 1:2 | VY-C |
| 44 | 5 | 96 | 95 | PVB | 1:1 | HCVPP |
| 45 | 5 | 94 | 105 | PVB | 1:1 | VY-C |
| 46 | 6 | 99 | 97 | EHEC | 1:1 | HCVPP |
| 47 | 6 | 118 | 103 | EHEC | 1:1 | VY-C |
| 48 | 6 | 38 | 98 | V | 1:2 | VY-C |
| 49 | 6 | 119 | 102 | PVB | 1:1 | HCVPP |
| 50 | 6 | 51 | 106 | PVB | 1:1 | VY-C |
| 51 | 10 | 91 | 106 | EC | 1:2 | VY-C |
| 52 | 10 | 66 | 105 | EC | 1:2 | HCVPP |
| 53 | 10 | 88 | 96 | EC | 1:2 | VY-SX |
| 54 | 12 | 126 | 104 | EHEC | 1:1 | HCVPP |
| 55 | 12 | 112 | 108 | EHEC | 1:1 | VY-C |
| 56 | 12 | 40 | 92 | V | 1:2 | VY-C |
| 59 | 12 | 81 | 104 | PVB | 1:1 | HCVPP |
| 60 | 12 | 97 | 108 | PVB | 1:1 | VY-C |
| 59 | 14 | 111 | 105 | EHEC | 1:1 | HCVPP |
| 60 | 14 | 124 | 111 | EHEC | 1:1 | VY-C |
| 61 | 14 | 62 | 107 | V | 1:2 | VY-C |
| 62 | 14 | 87 | 107 | PVB | 1:1 | HCVPP |
| 63 | 14 | 71 | 112 | PVB | 1:1 | VY-C |

Gute Ergebnisse werden auch mit Farbstoffen der nachfolgenden Formeln erzielt:

Bsp. Nr.

64

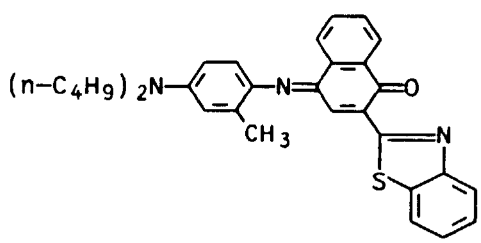

65 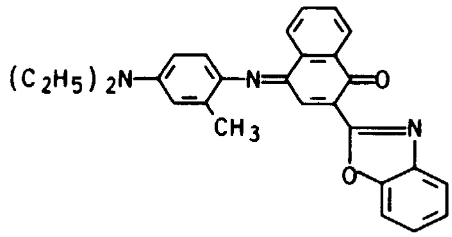

66 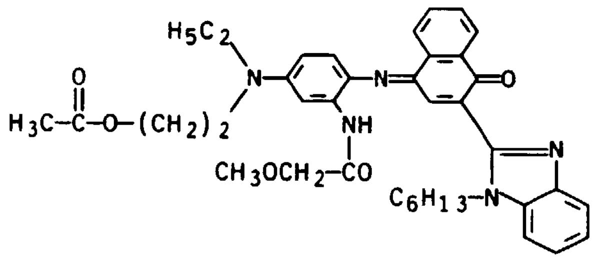

67 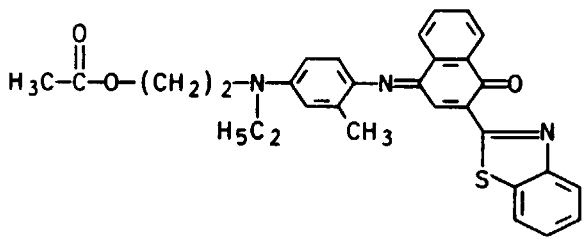

68 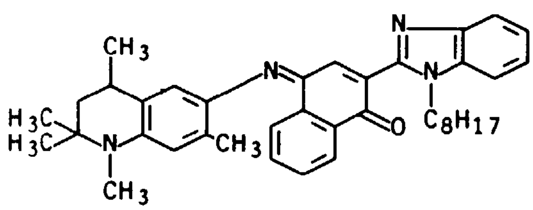

69 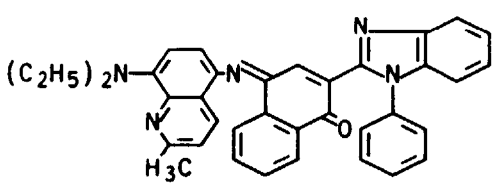

70 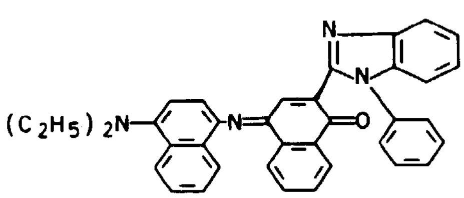

71 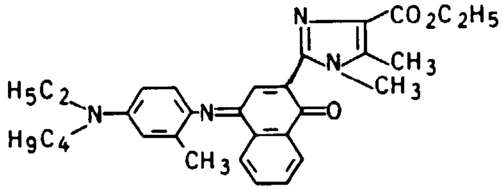

72 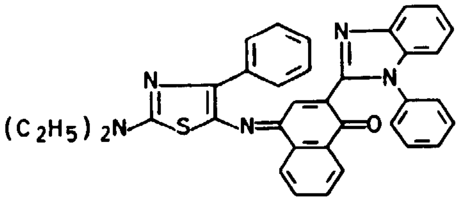

73 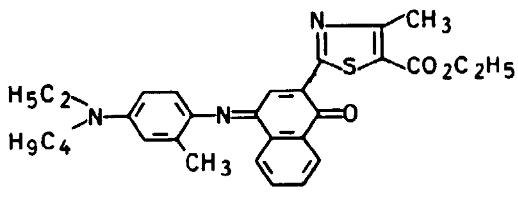

74 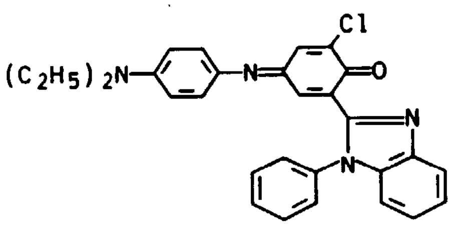

75 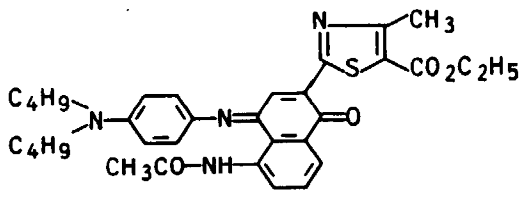

76 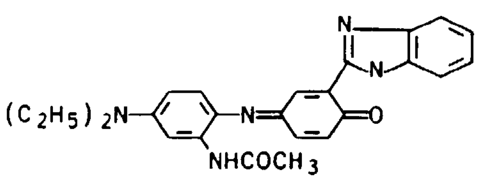

$R_f$-Wert (Essigester): 0,46 λmax (Tetrahydrofuran): 683 nm

77 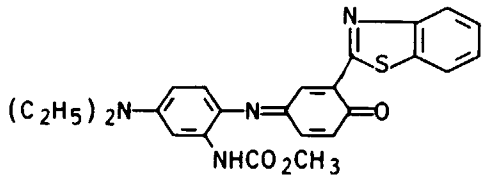

$R_f$-Wert (Toluol/Essigester 3:2 v/v): 0,48 λmax (Tetrahydrofuran): 676 nm

**Patentansprüche**

1. Indophenolfarbstoffe der Formel I

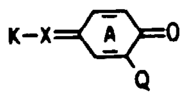 (I),

in der

X Stickstoff,

Q einen fünfgliedrigen aromatischen heterocyclischen Rest, der sich von einem Heterocyclus ableitet, ausgewählt aus der Gruppe, bestehend aus Pyrazol, Imidazol, Oxazol, Isoxazol, Thiazol, Isothiazol, Indazol, Benzimidazol, Benzoxazol, Benzisoxazol, Benzthiazol und Benzisothiazol, und

K einen Rest der Formel

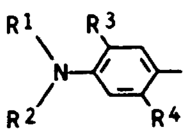 ,
(IIa)

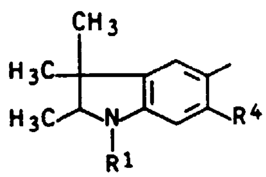 ,
(IIb)

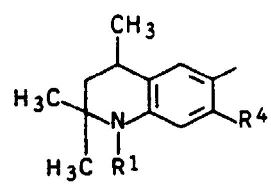 ,
(IIc)

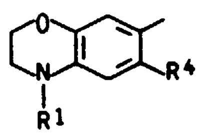 ,
(IId)

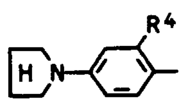 ,
(IIe)

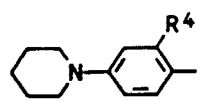 ,
(IIf)

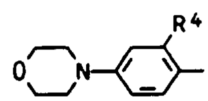 ,
(IIg)

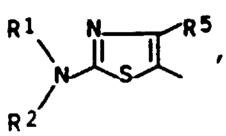 ,
(IIh)

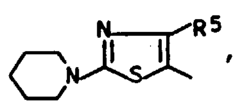 ,
(IIi)

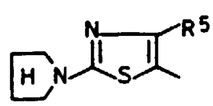 ,
(IIj)

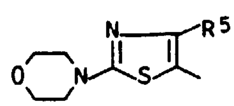 ,
(IIk)

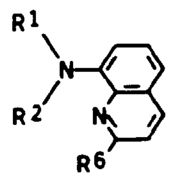

(IIl)

oder

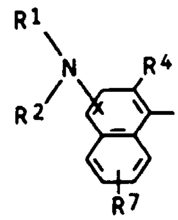

(IIm)

bedeuten, worin

$R^1$ und $R^2$ gleich oder verschieden sind und unabhängig voneinander jeweils für Wasserstoff, $C_1$-$C_8$-Alkyl, das gegebenenfalls substituiert ist und durch ein oder zwei Sauerstoffatome in Etherfunktion unterbrochen sein kann oder $C_5$-$C_7$-Cycloalkyl,

$R^3$ für Wasserstoff, Methyl, Ethyl, Methoxy oder Ethoxy,

$R^4$ für Wasserstoff, Methyl, Methoxy, $C_1$-$C_4$-Alkylsulfonylamino, $C_1$-$C_4$-Mono- oder -Dialkylaminosulfonylamino oder den Rest $-NHCOR^8$ oder $-NHCO_2R^8$ stehen, worin $R^8$ jeweils die Bedeutung von Phenyl, Benzyl, Tolyl oder $C_1$-$C_8$-Alkyl, das gegebenenfalls durch ein oder zwei Sauerstoffatome in Etherfunktion unterbrochen ist, besitzt,

$R^5$ für Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl, Hydroxy oder $C_1$-$C_8$-Monoalkylamino,

$R^6$ für Wasserstoff oder Methyl und

$R^7$ für Wasserstoff, Methyl, Methoxy oder Acetylamino stehen und

der Ring A durch einen gegebenenfalls substituierten Benzoring anelliert sein kann.

**2.** Indophenolfarbstoffe nach Anspruch 1, dadurch gekennzeichnet, daß Q für einen Rest der Formel

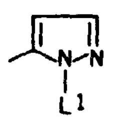

(IIIa) ,

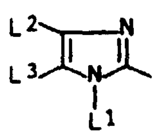

(IIIb) ,

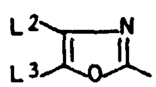

(IIIc) ,

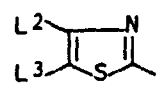

(IIId) oder

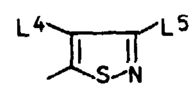

(IIIe)

steht,
worin

$L^1$ Wasserstoff, $C_1$-$C_8$-Alkyl, Benzyl, Cyclohexyl, Phenyl oder Tolyl,

$L^2$ Wasserstoff, Chlor, $C_1$-$C_8$-Alkyl, das gegebenenfalls durch ein Sauerstoffatom in Etherfunktion unterbrochen ist, Phenyl, $C_1$-$C_8$-Alkoxy, Cyano oder $C_1$-$C_8$-Alkoxycarbonyl, wobei die Alkylgruppe durch ein oder zwei Sauerstoffatome in Etherfunktion unterbrochen sein kann,

$L^3$ Wasserstoff, $C_1$-$C_8$-Alkyl, Phenyl, Cyano, Nitro oder $C_1$-$C_8$-Alkoxycarbonyl, wobei die Alkylgruppe durch ein oder zwei Sauerstoffatome in Etherfunktion unterbrochen sein kann, oder $L^2$ und $L^3$ zusammen einen anellierten Benzoring,

$L^4$ Wasserstoff, Chlor, Cyano, Nitro oder $C_1$-$C_8$-Alkoxycarbonyl, wobei die Alkylgruppe durch ein oder zwei Sauerstoffatome in Etherfunktion unterbrochen sein kann, und

$L^5$ Chlor, $C_1$-$C_8$-Alkyl, das gegebenenfalls durch ein Sauerstoffatom in Etherfunktion unterbrochen ist, $C_1$-$C_8$-Alkoxy oder $C_1$-$C_8$-Alkylthio. bedeuten.

3. Verfahren zur Übertragung von Indophenolfarbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich ein oder mehrere Indophenol-farbstoffe der Formel I gemäß Anspruch 1 befinden.

## Claims

1. An indophenol dye of the formula I

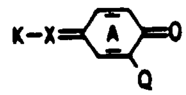

(I)

where

X is nitrogen,

Q is a five-membered aromatic heterocyclic radical from a heterocycle selected from the group consisting of pyrazole, imidazole, oxazole, isoxazole, thiazole, isothiazole, indazole, benzimidazole, benzoxazole, benzisoxazole, benzothiazole and benzisothiazole, and

K is a radical of the formula

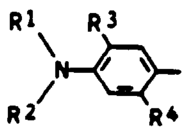 ,

(IIa)

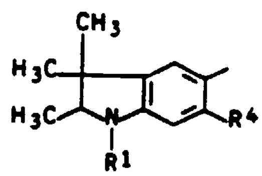 ,

(IIb)

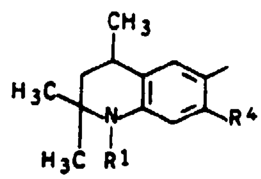 ,

(IIc)

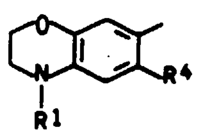 ,

(IId)

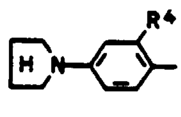 ,

(IIe)

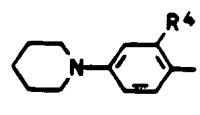 ,

(IIf)

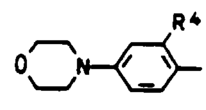 ,

(IIg)

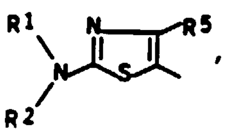 ,

(IIh)

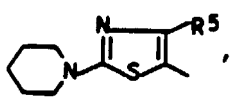 ,

(IIi)

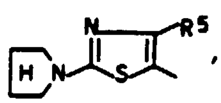 ,

(IIj)

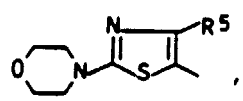 ,

(IIk)

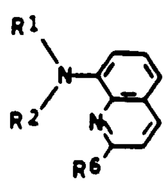

(IIl)

or

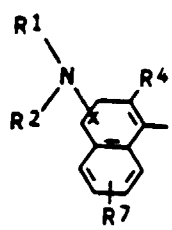

(IIm)

where

| | |
|---|---|
| $R^1$ and $R^2$ | are identical or different and each is independently of the other hydrogen, $C_1$-$C_8$-alkyl, which may be substituted and interrupted by one or two oxygen atoms in ether function, or $C_5$-$C_7$-cycloalkyl, |
| $R^3$ | is hydrogen, methyl, ethyl, methoxy or ethoxy, |
| $R^4$ | is hydrogen, methyl, methoxy, $C_1$-$C_4$-alkylsulfonylamino, $C_1$-$C_4$-mono- or -dialkylaminosulfonylamino or the radical -$NHCOR^8$ or -$NHCO_2R^8$, where $R^8$ is in either case phenyl, benzyl, tolyl or $C_1$-$C_8$-alkyl which may be interrupted by one or two oxygen atoms in ether function, |
| $R^5$ | is hydrogen, halogen, $C_1$-$C_8$-alkyl, unsubstituted or $C_1$-$C_4$-alkyl- or $C_1$-$C_4$-alkoxy-substituted phenyl, unsubstituted or $C_1$-$C_4$-alkyl- or $C_1$-$C_4$-alkoxy-substituted benzyl, cyclohexyl, thienyl, hydroxyl or $C_1$-$C_8$-monoalkylamino, |
| $R^6$ | is hydrogen or methyl, and |
| $R^7$ | is hydrogen, methyl, methoxy or acetylamino, and |

the ring A may be fused to a substituted or unsubstituted benzene ring.

**2.** An indophenol dye as claimed in claim 1, wherein Q is a radical of the formula

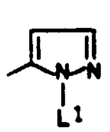 ,
(IIIa)

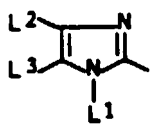 ,
(IIIb)

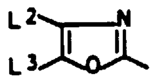 ,
(IIIc)

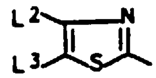 or
(IIId)

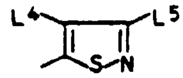
(IIIe)

where

- $L^1$ is hydrogen, $C_1$-$C_8$-alkyl, benzyl, cyclohexyl, phenyl or tolyl,
- $L^2$ is hydrogen, chlorine, $C_1$-$C_8$-alkyl, which may be interrupted by an oxygen atom in ether function, phenyl, $C_1$-$C_8$-alkoxy, cyano or $C_1$-$C_8$-alkoxycarbonyl in which the alkyl group may be interrupted by one or two oxygen atoms in ether function,
- $L^3$ is hydrogen, $C_1$-$C_8$-alkyl, phenyl, cyano, nitro or $C_1$-$C_8$-alkoxycarbonyl in which the alkyl group may be interrupted by one or two oxygen atoms in ether function, or $L^2$ and $L^3$ together form a fused benzene ring,
- $L^4$ is hydrogen, chlorine, cyano, nitro or $C_1$-$C_8$-alkoxycarbonyl in which the alkyl group may be interrupted by one or two oxygen atoms in ether function, and
- $L^5$ is chlorine, $C_1$-$C_8$-alkyl, which may be interrupted by an oxygen atom in ether function, $C_1$-$C_8$-alkoxy or $C_1$-$C_8$-alkylthio.

**3.** A process for transferring indophenol dyes from a transfer to a sheet of plastic-coated paper by diffusion or sublimation with the aid of an energy source, which comprises using a transfer on which there is or are one or more indophenol dyes of the formula I as claimed in claim 1.

**Revendications**

**1.** Colorants de la famille des indophénols de formule I

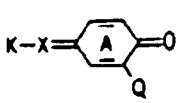 (I),

dans laquelle

- X représente un atome d'azote,
- Q représente un reste hétérocyclique aromatique à cinq maillons qui dérive d'un hétérocycle choisi dans le groupe constitué par le pyrazole, l'imidazole, l'oxazole, l'isoxazole, le thiazole, l'isothiazole, l'indazole, le benzimidazole, le benzoxazole, le benzisoxazole, le benzothiazole et le benzisothiazole, et
- K représente un reste de formule

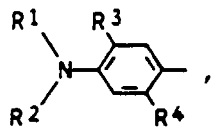

(IIa)

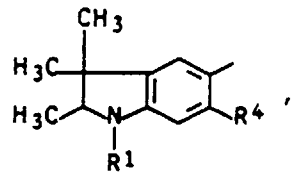

(IIb)

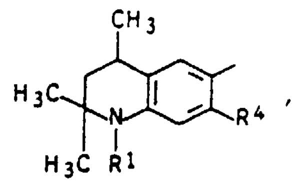

(IIc)

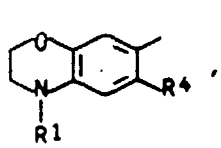

(IId)

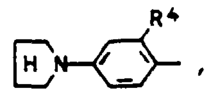

(IIe)

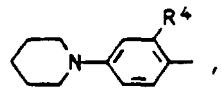

(IIf)

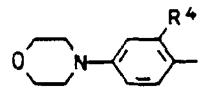

(IIg)

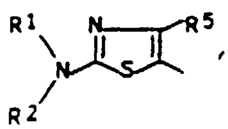

(IIh)

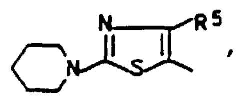

(IIi)

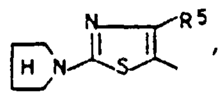

(IIj)

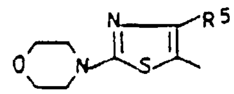

(IIk)

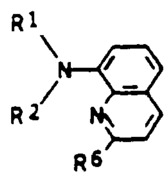

(IIl)

ou

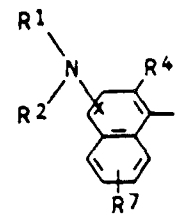

(IIm)

où

- $R^1$ et $R^2$ sont identiques ou différents et sont mis chacun, indépendamment l'un de l'autre, pour un atome d'hydrogène, pour un reste alkyle en $C_1$-$C_8$ qui est éventuellement substitué et peut être interrompu par un ou deux atomes d'oxygène en fonction éther, ou pour un reste cycloalkyle en $C_5$-$C_7$,
- $R^3$ est mis pour un atome d'hydrogène ou pour un reste méthyle, éthyle, méthoxy ou éthoxy,
- $R^4$ est mis pour un atome d'hydrogène ou pour un reste méthyle, méthoxy, alkylsulfonylamino en $C_1$-$C_4$, mono- ou di(alkyl en $C_1$-$C_4$)-aminosulfonylamino ou pour le reste -$NHCOR^8$ ou -$NHCO_2R^8$, $R^8$ représentant chaque fois un groupement phényle, benzyle, tolyle ou alkyle en $C_1$-$C_8$ qui est éventuellement interrompu par un ou deux atomes d'oxygène en fonction éther,
- $R^5$ est mis pour un atome d'hydrogène, d'halogène ou pour un reste alkyle en $C_1$-$C_8$, phényle éventuellement substitué par un groupement alkyle en $C_1$-$C_4$ ou alcoxy en $C_1$-$C_4$, benzyle éventuellement substitué par un groupement alkyle en $C_1$-$C_4$ ou alcoxy en $C_1$-$C_4$, cyclohexyle, thiényle, hydroxy ou mono(alkyl en $C_1$-$C_8$)amino,
- $R^6$ est mis pour un atome d'hydrogène ou un reste méthyle et
- $R^7$ est mis pour un atome d'hydrogène ou un reste

méthyle, méthoxy ou acétylamino, et le noyau A peut être condensé par un noyau benzénique éventuellement substitué.

**2.** Colorants de la famille des indophénols selon la revendication 1, caractérisés en ce que Q est mis pour un reste de formule

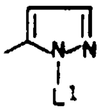 , 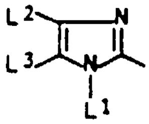 , 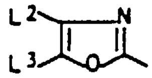 , 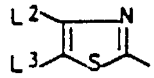 ou 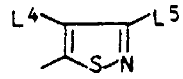

(IIIa) (IIIb) (IIIc) (IIId) (IIIe)

dans laquelle

- $L^1$ représente un atome d'hydrogène ou un reste alkyle en $C_1$-$C_8$, benzyle, cyclohexyle, phényle ou tolyle,
- $L^2$ représente un atome d'hydrogène, de chlore ou un reste alkyle en $C_1$-$C_8$ qui est éventuellement interrompu par un atome d'oxygène en fonction éther, phényle, alcoxy en $C_1$-$C_8$, cyano ou (alcoxy en $C_1$-$C_8$)carbonyle, le groupement alkyle pouvant être interrompu par un ou deux atomes d'oxygène en fonction éther,
- $L^3$ représente un atome d'hydrogène ou un reste alkyle en $C_1$-$C_8$, phényle, cyano, nitro ou (alcoxy en $C_1$-$C_8$) carbonyle, le groupement alkyle pouvant être interrompu par un ou deux atomes d'oxygène en fonction éther, ou $L^2$ et $L^3$ représentent ensemble un noyau benzénique condensé,
- $L^4$ représente un atome d'hydrogène, de chlore ou un reste cyano, nitro ou (alcoxy en $C_1$-$C_8$)carbonyle, le groupement alkyle pouvant être interrompu par un ou deux atomes d'oxygène en fonction éther, et
- $L^5$ représente un atome de chlore ou un reste alkyle en $C_1$-$C_8$ qui est éventuellement interrompu par un atome d'oxygène en fonction éther, alcoxy en $C_1$-$C_8$ ou alkylthio en $C_1$-$C_8$.

**3.** Procédé de transfert de colorants de la famille des indophénols entre un support et un papier revêtu de matière plastique, par diffusion ou sublimation à l'aide d'une source d'énergie, caractérisé en ce que l'on utilise un support sur lequel se trouvent un ou plusieurs colorants de la famille des indophénols de formule I selon la revendication 1.